# EUROPÄISCHE PATENTSCHRIFT

(11) **EP 1 598 690 B1**
(45) Veröffentlichungstag und Bekanntmachung des Hinweises auf die Patenterteilung: **04.10.2006**
(21) Anmeldenummer: 05010396.9
(22) Anmeldetag: 12.05.2005
(51) Int. Cl.: G02B 23/18, G02B 7/06

(54) **Fokussiereinrichtung mit Dioptrieeinstellung für binokulare Fernrohre**
Focussing arrangement with diopter adjustment for binocular telescopes
Dispositif de focalisation avec ajustage de dioptre pour téléscopes binoculaires

(30) Priorität: 21.05.2004 DE 102004024964
(43) Veröffentlichungstag der Anmeldung: 23.11.2005
(73) Patentinhaber: Leica Camera AG, 35606 Solms (DE)
(72) Erfinder: Hengst, Alfred, 35633 Lahnau (DE); Speier, Rolf, 35435 Wettenberg (DE)
(74) Vertreter: Stamer, Harald

(56) Entgegenhaltungen:
- EP-A- 0 961 147
- DE-A1- 3 830 620
- DE-U1- 8 404 136
- US-A- 4 329 013

## Beschreibung

Die Erfindung betrifft ein Verfahren und eine Vorrichtung zur Durchführung des Verfahrens zur Fokussierung und Dioptrieeinstellung bei einem binokularen Fernrohr, bei dem zur Dioptrieeinstellung optische Fokussierglieder in den beiden Fernrohrtuben relativ zueinander verstellt werden.

Aus DE 29 20 583 C2 ist ein binokulares Fernrohr mit Innenfokussierung bekannt. An einer Brücke sind die beiden Fernrohrtuben schwenkbar gelagert. An der Brücke ist ein Fokussier-Triebknopf gelagert, der über einen Fokussierantrieb mit den in den Fernrohrtuben verschiebbar gelagerten optischen Fokussiergliedern gekoppelt ist. Zur Dioptrieeinstellung ist eines der Fokussierglieder außerdem drehbar gelagert, wobei der Fokussierantrieb an der Koppelstelle in einer spiraligen Nut in der Fassung des Fokussiergliedes geführt ist. Durch Drehen dieses Fokussiergliedes erfolgt daher eine axiale Relativverstellung gegenüber dem anderen Fokussierglied.

Aus EP 0 416 346 B1 ist ein binokulares Fernrohr bekannt, bei dem an gegenüber liegenden Seiten der Brücke ein Fokussier-Triebknopf und ein Dioptrieeinstell-Triebknopf angeordnet sind. Über einen auf zwei getrennte Stellmittel einwirkenden Fokussierantrieb werden die beiden optischen Fokussierglieder simultan um gleiche Wege verstellt. Der Dioptrieeinstell-Triebknopf ist über eine Kupplungswelle mit dem einen und über ein Gewinde mit dem anderen Stellmittel verbunden. Über die Kupplungswelle kann das eine Fokussierglied relativ zum anderen Fokussierglied verstellt werden. Die Funktionszuordnung der beiden Triebknöpfe ist nicht ohne weiteres erkennbar, so daß unbeabsichtigte Fehleinstellungen nicht auszuschließen sind.

Eine weitere bekannte Lösung nach DE 38 30 620 C2 besteht darin, den Fokussier-Triebknopf mit einer Doppelfunktion auszubilden, bei der zwei Rastpositionen für die Fokussierung und die Dioptrieeinstellung vorgesehen sind. Bei der Dioptrieeinstellung muß nach dem Einstellen des ersten Tubus das Fernglas abgesetzt und der Triebknopf umgeschaltet bzw. entkoppelt werden. Das Testobjekt muß erneut gesucht und angepeilt werden. Abschließend muß der Triebknopf wieder in die Ausgangsposition gebracht werden.

Alle bekannte Lösungen mit Innenfokussierung und Dioptrieausgleich erfordern ein Umgreifen auf getrennte Einstellvorrichtungen für die Fokussierung und die Dioptrieeinstellung. Die Bedienelemente für die Dioptrieeinstellung liegen häufig an ergonomisch ungünstigen Stellen, wodurch Verwacklungen im Bild bei der Einstellung entstehen. Oft wird das Ziel aus den Augen verloren und muß neu gesucht werden.

Weitere Binokularfernrohre sind in EP 0961147 ,US 4329013 und DE 8404 136 offenbart.

Der Erfindung lag daher die Aufgabe zugrunde, ein Verfahren und eine Vorrichtung für einen einfachen und logischen Individual-Schärfeabgleich (Dioptrieeinstellung) bei binokularen Beobachtungsgeräten mit Zentralfokussierung zu schaffen. Der Einstellmechanismus sollte es ermöglichen, mit ein und demselben ergonomisch günstig gelegenen Bedienknopf ohne Umschaltvorgänge die Entfernungseinstellung und die Dioptrieeinstellung vornehmen zu können.

Diese Aufgabe wird erfindungsgemäß durch die kennzeichnenden Merkmale des im Anspruch 1 angegebenen Verfahrens gelöst.

Der Grundgedanke des erfindungsgemäßen Verfahrens besteht darin, daß bei der Dioptrieeinstellung mit dem Triebknopf zunächst ein Tubus auf ein Testobjekt scharf eingestellt wird. Durch nachfolgendes Drücken einer Arretiertaste mit der zweiten Hand wird diese Einstellung fixiert, während dann mit demselben Triebknopf nach Überwinden einer Friktionskraft der zweite Tubus scharf eingestellt wird. Nach Loslassen der Arretiertaste ist das Fernglas individuell auf die beiden Augen des Benutzers eingestellt und der Triebknopf dient nur über den gesamten Entfernungsbereich zur Fokussierung auf ein zu beobachtendes Objekt.

Zwei Vorrichtungen zur Durchführung des erfindungsgemäßen Verfahrens ergeben sich aus den kennzeichnenden Merkmalen der Ansprüche 2 und 5. Vorteilhafte Weiterbildungen und Ausgestaltungen der Vorrichtungen sind in den Unteransprüchen angegeben.

Ausführungsbeispiele der Erfindung sind in der Zeichnung schematisch dargestellt und werden anhand der Figuren näher beschrieben. Dabei zeigen
Fig.1 ein erstes Ausführungsbeispiel mit Friktion am schwenkbaren Hebel,
Fig.2 einen Querschnitt des Schwenklagers mit Friktion,
Fig.3 ein zweites Ausführungsbeispiel mit Friktion im Fokussierantrieb,
Fig.4 einen Querschnitt durch den Fokussierantrieb mit Spindel und Achsrohr und
Fig.5 einen Querschnitt durch den Fokussier-Triebknopf und den Fokussierantrieb.

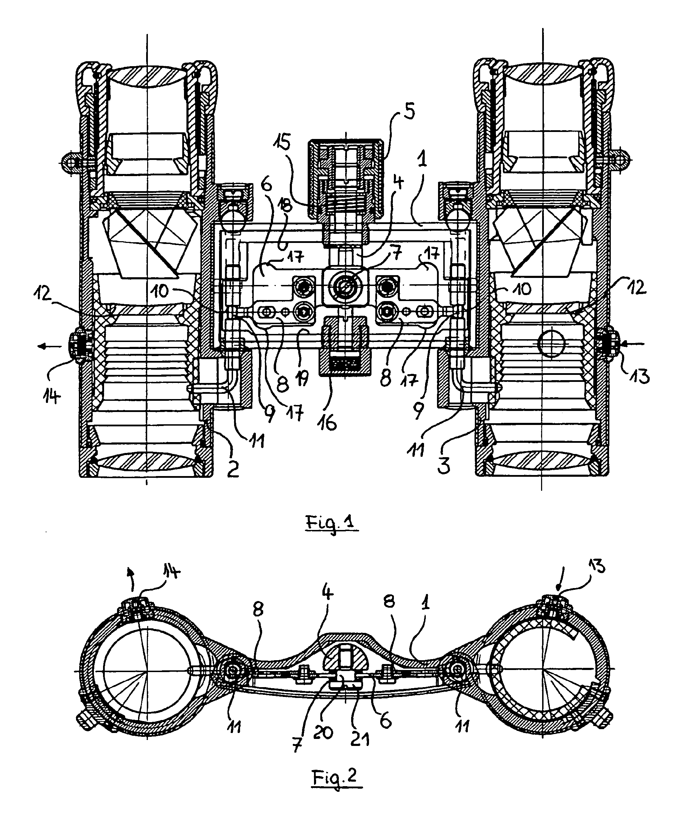

Fig.1 zeigt ein binokulares Fernglas mit einer Brücke 1, an der die beiden Fernrohrtuben 2, 3 über zwei Gelenke gegeneinander verschwenkbar sind. Im Zentrum der Brücke 1 ist eine längs verschiebbare Spindel 4 gelagert. Am oberen Ende weist die Spindel 4 ein Außengewinde auf, das in ein Innengewinde eines drehbar auf der Brücke 1 gelagerten Fokussier-Triebknopfes 5 eingreift. Selbstverständlich können das Innen- und Außengewinde bezüglich der beiden Teile auch vertauscht sein. Durch Drehen des Fokussier-Triebknopfes 5 wird eine Axialbewegung der Spindel 4 bewirkt.

Am unteren, in der Brücke 1 liegenden Teil der Spindel 4 ist ein quer zur Spindel 4 angeordneter zweiarmiger Hebel 6 schwenkbar so gelagert, daß er sich mit einem bestimmten Drehmoment bewegen läßt. Das Schwenklager 7 ist durch hier nicht dargestellte Federspann- und Reibelemente mit einer bestimmten Friktionskraft ausgestattet.

An den beiden Seiten des Hebels 6 sind relativ zum Hebel 6 schwenkbare Kopplungshebel 8 angebracht, die zur Justierung der Optiken in den beiden Fernrohrtuben 2, 3 dienen. Die Kopplungshebel 8 greifen mit einem ballig geformten Ende 9 in ringförmige Einstiche 10 von in der Gelenkachse der Fernrohrtuben 2, 3 gelagerten Stangen 11 ein. Die Stangen 11 greifen über einen abgewinkelten Ansatz in die Fassungen der in den Fernrohrtuben 2, 3 längsverstellbaren Fokussierglieder 12 ein. Durch Drehen des Fokussier-Triebknopfes 5 werden daher die beiden Fokussierglieder 12 simultan axial verstellt.

An den beiden Fernrohrtuben 2, 3 sind in griffgünstiger Lage Druckknöpfe 13, 14 angebracht. Der in Pfeilrichtung eingedrückt dargestellte Druckknopf 13 bewirkt durch Druck auf die Fassung eine Arretierung des Fokussiergliedes 12 im Fernrohrtubus 3.

Die Arretierkraft einerseits und die Friktionskraft im Schwenklager 7 andererseits sind so aufeinander abgestimmt, daß sich bei betätigtem Druckknopf 13, 14 an einem der Fernrohrtuben 2, 3 und gleichzeitigem Drehen des Fokussier-Triebknopfes 5 der zweiarmige Hebel 6 in seinem Schwenklager 7 an der Spindel 4 verschwenkt und dabei nur das Fokussierglied 12 im jeweils anderen Tubus verstellt. Nach Loslassen des eingedrückten Druckknopfes hält die Friktionskraft im Schwenklager 7 den zweiarmigen Hebel 6 in seiner gegenüber der Spindel 4 verschwenkten Stellung und damit die Fokussierglieder 12 ebenfalls in einer relativ zueinander verschobenen Lage. Beim Drehen des Fokussier-Triebknopfes 5 werden die Fokussierglieder 12 simultan unter Beibehalten der gegenseitigen Relativlage verstellt.

Zur triebseitigen und gegenüber liegenden Begrenzung des Stellweges der Spindel 4 sind vorgespannte Federpakete 15, 16 in den Lagern der Spindel 4 vorgesehen. Der Stellweg zwischen den Federpaketen 15, 16 ist so ausgelegt, daß eine ungehinderte Bewegung der Spindel 4 auch mit maximal verschwenktem Hebel 6 innerhalb der Brücke 1 möglich ist.

Durch etwas stärkeres Weiterdrehen des Fokussier-Triebknopfes 5 kann in den beiden Endpositionen der Spindel 4 gegen den Druck des jeweiligen Federpaketes 15, 16 eine zusätzliche geringe Bewegung der Spindel 4 ausgeführt werden.

An dem Hebel 6 sind am Ende der beiden Arme in Richtung der Stellbewegungen jeweils Anschlagnoppen 17 angeformt. Die Brücke 1 enthält triebseitig und dazu gegenüber liegend Anschlagflächen 18, 19. Die Anschlagnoppen 17 und Anschlagflächen 18, 19 sind so aufeinander abgestimmt, daß einer der Anschlagnoppen 17 bei schräggestelltem Hebel 6 erst dann an einer der Anschlagflächen 18, 19 zu Anlage kommt, wenn die Spindel 4 gegen den Druck eines der Federpakete 15, 16 weiter verstellt wird. Der gegen den Druck des Federpaketes 15, 16 mögliche weitere Stellweg der Spindel 4 ist so bemessen, daß jeweils die Anschlagnoppen 17 beider Arme auf derselben Seite des Hebels 6 mit der jeweiligen Anschlagfläche 18, 19 in der Brücke 1 zur Anlage kommen können. Dabei dreht sich der Hebel 6 gegen die Friktionskraft im Schwenklager 7 in seine Ausgangslage orthogonal zur Spindel 4 zurück. Diese Rückstellung auf gleiche Sehschärfe in den beiden Fernrohrtuben 2, 3 kann somit an den Fokussierendstellungen für unendlich ferne und sehr nahe Beobachtung in gleicher Weise erfolgen.

Fig.2 zeigt im Querschnitt durch die Brücke 1 das Schwenklager 7. Der zweiarmige Hebel 7 ist auf dem Zapfen 20 einer Schraube 21 schwenkbar gelagert, die in die Spindel 4 eingeschraubt ist. Zwischen dem Schraubenkopf und Auflage auf der Spindel 4 sind auf den Zapfen 20 geeignete Reib- und/oder Federelemente eingelegt, die durch Festziehen und Fixieren der Schraube 21 die gewünschte Friktionskraft im Schwenklager 7 erzeugen.

Die beschriebene Funktionsweise der Fokussiereinrichtung erlaubt folgenden Bedienungsablauf zur Fokussierung und Dioptrieeinstellung. Mit dem Fokussier-Triebknopf 5 wird einer der Fernrohrtuben 2, 3 auf ein Testobjekt scharf eingestellt. Wenn beide Fernrohrtuben 2, 3 mit einer Arretiermöglichkeit für die Verstellung eines der Fokussierglieder 12 ausgestattet sind, ist es gleichgültig, welcher der Fernrohrtuben 2, 3 zunächst scharf eingestellt wird. Durch Drücken und Halten an dem eingestellten Tubus wird die Schärfe fixiert, während durch weiteres Drehen an dem Fokussier-Triebknopf 5 der jeweils andere Tubus auf das Testobjekt scharf eingestellt wird. Nach Loslassen des Druckknopfes 13. 14 sind die beiden Tuben auf die unterschiedlichen Sehschärfen der Augen der Bedienperson eingestellt. Die Fokussierung auf andere Objekte in unterschiedlicher Entfernung erfolgt danach wie üblich nur durch Drehen am Fokussier-Triebknopf 5.

Zum Zurücksetzen der Dioptrieeinstellung (Reset) braucht mit dem Fokussier-Triebknopf 5 die Spindel 4 nur gegen den Druck eines der Federpakete 15, 16 weiter bewegt zu werden.

Wegen der einfachen und schnellen Einstellung der Individualschärfe und der ebenso einfachen und schnellen Rückstellmöglichkeit auf gleiche Sehschärfe für beide Fernrohrtuben ist eine separate Dioptrieanzeige über eine besondere Dioptrienskala entbehrlich. Dem Benutzer erscheint die Bedienung weniger kompliziert. Er braucht sich nur auf die gewohnte Drehung eines Knopfes zur Scharfeinstellung und das kurzzeitige Drücken eines Knopfes zum Festhalten der Schärfe in einem Tubusrohr zu konzentrieren.

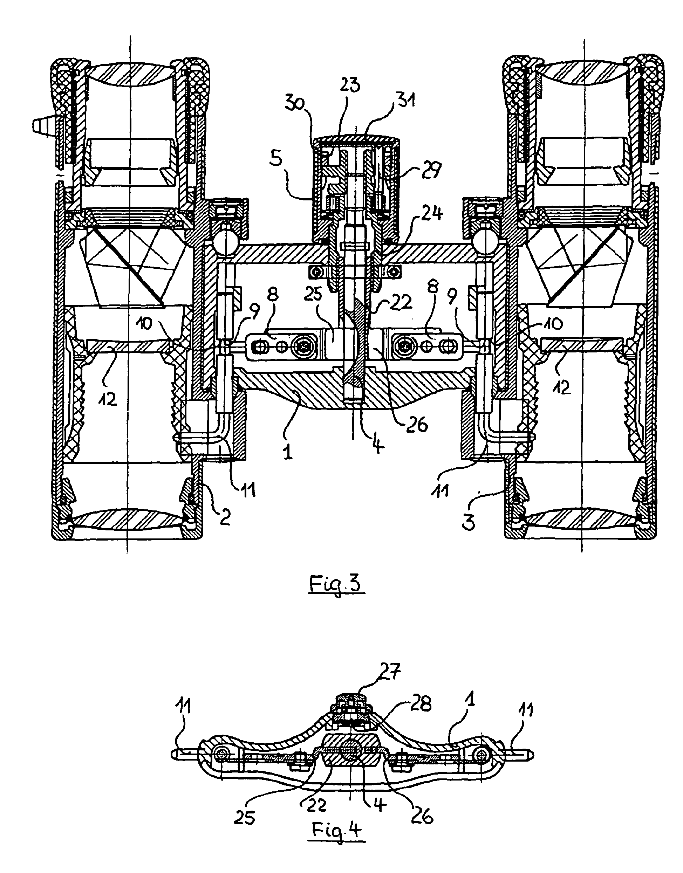

Fig.3 zeigt ein weiteres Ausführungsbeispiel, bei dem auf einer längsverstellbaren Spindel 4 koaxial ein längsverschiebbares Achsrohr 22 angeordnet ist. Am oberen Ende der Brücke 1 ist ein Fokussier-Triebknopf 5 drehbar gelagert. In diesem sind hintereinander zwei Gewindemuttern 23, 24 mit unterschiedlichen Gewindedurchmessern angeordnet. Die obere Gewindemutter 23 mit dem kleineren Gewinde ist mit dem Fokussier-Triebknopf 5 formschlüssig verbunden. In die Gewindemutter 23 greift ein unten an der Brücke 1 gegengelagerte Spindel 4 mit ihrem Außengewinde ein. Die untere, größere Gewindemutter 24 ist in der Brücke 1 drehbar gelagert und mit dem Fokussier-Triebknopf 5 mit einer bestimmten Friktionskraft kraftschlüssig verbunden. In das Gewinde dieser Mutter 24 greift ein am Achsrohr 22 angebrachtes Außengewinde ein.

An der Spindel 4 ist ein zum Fernrohrtubus 2 weisender Hebelarm 25 und am Achsrohr 22 ein zum Fernrohrtubus 3 weisender Hebelarm 26 angebracht. Auf beiden Hebelarmen 25, 26 sind wiederum Kopplungshebel 8 mit balligen Endstücken 9 angebracht, die zur Abstimmung der Optiken in den Fernrohrtuben 2, 3 dienen. Die balligen Endstücke 9 greifen wie beim ersten Ausführungsbeispiel in ringförmige Einstiche 10 in Stangen 11 zur Verstellung der Fokussierglieder 12 ein.

Beim Drehen des Fokussier-Triebknopfes 5 werden beide mit ihm verbundenen Gewindemuttern 23, 24 mitgedreht. Diese bewegen über die Spindel 4 und das Achsrohr 22 in Verbindung mit den jeweils nachfolgenden Getriebeketten simultan die Fokussierglieder 12 in den beiden Fernrohrtuben 2, 3.

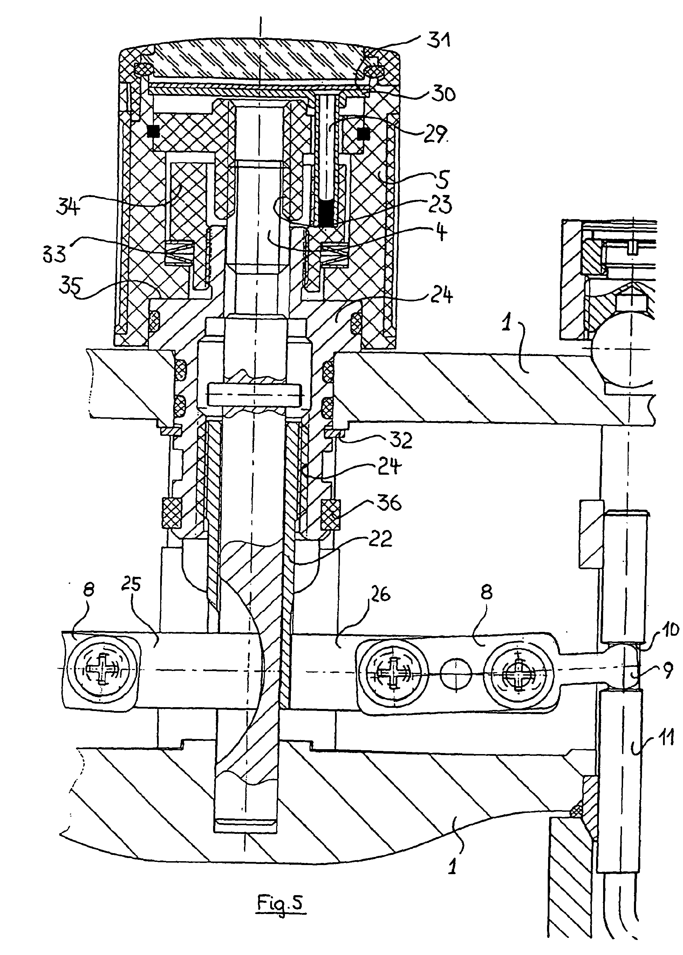

In Fig.4 ist an der Rückseite der Brücke 1 ein zurückfedernder Taster 27 dargestellt. Mit diesem kann ein axial in die Brücke 1 ragender Arretierbolzen 28 in die Brücke eingeschoben werden. Das untere Ende der in der Brücke 1 liegenden Gewindemutter 24 ist so ausgebildet, daß in Verbindung mit dem Arretierbolzen 28 des Tasters 27 eine kraft- oder formschlüssige Arretierung der Drehbewegung der unteren Gewindemutter 24 erfolgen kann. Anstelle des Arretierbolzens 28 kann insbesondere auch eine zylinderförmige Andruckbacke an dem Taster 27 vorgesehen sein, die einen zylindrischen Ansatz an der Gewindemutter 24 umgreift.

Bei eingedrücktem Taster 27 wird beim Drehen des Fokussier-Triebknopfes 5 nur die obere, mit ihm fest verbundene obere Gewindemutter 23 mitgedreht. Zwischen dem Fokussier-Triebknopf 5 und der unteren Gewindemutter 24 wird die Friktionskraft überwunden, so daß es zu einer relativen Drehbewegung gegenüber der unteren Gewindemutter 24 kommt. In diesem Fall kommt es also beim Drehen des Fokussier-Triebknopfes 5 nur zu einer Fokussierung im Fernrohrtubus 2.

Auf der oberen kreisförmigen Fläche des Fokussier-Triebknopfes 5 ist eine Dioptrienanzeige angebracht, welche die Fokussiereinstellung beider Fernrohrtuben 2, 3 zueinander anzeigt. Mittels eines Übertragungsstiftes 29 besteht eine Kopplung einer Dioptrienscheibe 30 mit der unteren Gewindemutter 24. Die zur Dioptrienscheibe 30 in Relation stehende Indexmarke ist auf einer fest mit dem Fokussier-Triebknopf 5 verbundenen durchsichtigen Scheibe 31 angebracht.

Der Bedienungsablauf zur Fokussierung und Dioptrieeinstellung muß bei diesem Ausführungsbeispiel wie folgt geschehen. Mit dem Fokussier-Triebknopf 5 wird zunächst der Fernrohrtubus 3 auf ein Testobjekt scharf eingestellt. Durch Drücken und Halten des Tasters 27 an der Brücke 1 wird die Schärfe dieses Fernrohrtubus 3 fixiert, während mit dem Fokussier-Triebknopf 5 nun der Fernrohrtubus 2 auf das Testobjekt scharf eingestellt wird. Nach Loslassen des Tasters 27 werden wieder beide Fokussierglieder 12 simultan unter Beibehalten ihrer gegenseitigen Relativlagen zur Fokussierung verschoben.

Zur Voreinstellung eines bekannten Dioptrienwertes für unterschiedliche Augen wird der Taster 27 eingedrückt und durch Drehen des Fokussier-Triebknopfes 5 der gewünschte Dioptrienwert durch Übereinstimmung der Dioptrienscheibe 30 mit der Indexmarkierung 31 eingestellt.

Fig.5 zeigt den Fokussier-Triebknopf 5 und den Fokussierantrieb des zweiten Ausführungsbeispiels im Detail. Die untere Gewindemutter 24 ist in die Brücke 1 eingesetzt und wird innerhalb der Brücke 1 von einem Sprengring 32 drehbar gehalten. Zur Abdichtung des Drehsitzes sind nicht bezeichnete O-Ringe vorgesehen. Auf die Gewindemutter 24 ist der Fokussier-Triebknopf 5 unter der Spannung einer Feder 33 aufgesetzt. Die Federspannung wird durch eine Überwurfmutter 34 erzeugt, die mit der Gewindemutter 24 verschraubt ist. Die Federspannung wird so eingestellt, daß die gewünschte Friktionskraft in der Sitzfläche 35 des Fokussier-Triebknopfes 5 auf der Gewindemutter 24 erreicht wird. In die Sitzfläche 35 können zusätzlich nicht dargestellte Reibscheiben eingelegt sein.

Bei der Gestaltung des Sitzes und der Einspannung des Fokussier-Triebknopfes 5 auf der Gewindemutter 24, sowie bei der Drehlagerung der Gewindemutter 24 in der Brücke 1 ist darauf zu achten, daß beim Druck auf den Fokussier-Triebknopf 5 quer zu seiner Drehachse keine Kippmomente entstehen können.

Die Ausrichtung der Kopplungshebel 8 auf den Hebelarmen 25, 26 bewirkt eine Justierung der Stange 11 und damit des angetriebenen Fokussiergliedes 12. Die Abstimmung kann z.B. bei Fokussierung auf Unendlich und ohne Dioptrieeinstellung vorgenommen werden.

Auf dem in der Brücke 1 liegenden Teil der unteren Gewindemutter 24 ist ein Reibring 36 angebracht, der im Zusammenwirken mit dem hier nicht dargestellten Arretierbolzen 28 eine feste Arretierung für die Dioptrieeinstellung über die Verschiebung der Spindel 4 sicherstellt. Selbstverständlich ist auch die umgekehrte Anordnung möglich, bei der der reibende Belag auf dem einzudrückenden Arretierteil angebracht ist.

### Bezugszeichenliste

- 1: Brücke
- 2, 3: Fernrohrtuben
- 4: Spindel
- 5: Fokussier-Triebknopf
- 6: zweiarmiger Hebel
- 7: Schwenklager
- 8: Kopplungshebel
- 9: balliges Ende am Kopplungshebel
- 10: ringförmiger Einstich
- 11: Stangen
- 12: Fokussierglieder
- 13,14: Druckknopf
- 15,16: vorgespanntes Federpaket
- 17: Anschlagnoppen
- 18,19: Anschlagflächen
- 20: Zapfen
- 21: Schraube
- 22: Achsrohr
- 23: obere Gewindemutter
- 24: untere Gewindemutter
- 25,26: Hebelarme
- 27: Taster
- 28: Arretierbolzen
- 29: Übertragungsstift
- 30: Dioptrienscheibe
- 31: Indexmarken-Scheibe
- 32: Sprengring
- 33: Feder
- 34: Überwurfmutter
- 35: Sitzfläche
- 36: Reibring

## Patentansprüche

1. Verfahren zur Fokussierung und Dioptrieeinstellung bei einem binokularen Fernrohr, bei dem zur Dioptrieeinstellung optische Fokussierglieder (12) in den beiden Fernrohrtuben (2, 3) relativ zueinander verstellt werden wobei,
- durch Drehen eines Fokussier-Triebknopfes (5) über einen Fokussierantrieb beide Fokussierglieder (12) simultan um gleiche Wege verstellt werden, **dadurch gekennzeichnet daß**
- die Verschiebung zumindest eines der Fokussierglieder (12) arretiert werden kann und daß
- durch Drehung des Fokussier-Triebknopfes (5) dann unter Überwindung einer Friktionskraft im Fokussierantrieb zum arretierten Fokussierglied (12) nur das nicht arretierte Fokussierglied (12) verschoben wird.

2. Vorrichtung zur Durchführung des Verfahrens nach Anspruch 1 mit einer Brücke (1), an der die beiden Fernrohrtuben (2, 3) befestigt sind und einem an der Brücke (1) gelagerten Fokussier-Triebknopf (5) mit Fokussierantrieb, der mit den in den Fernrohrtuben (2, 3) verschiebbar gelagerten Fokussiergliedern (12) gekoppelt ist,
**dadurch gekennzeichnet, daß**
- der Fokussierantrieb eine längsverschiebliche Spindel (4) und einen quer zur Spindel (4) liegenden zweiarmigen Hebel (6) enthält, wobei
- der Hebel (6) auf der Spindel (4) unter Überwindung einer Friktionskraft schwenkbar gelagert (7) ist und seine Hebelarme mit den Fokussiergliedern (12) gekoppelt sind und wobei
- an mindestens einem der Fernrohrtuben (2, 3) ein von außen betätigbares, auf das zugehörige Fokussierglied (12) einwirkendes Arretiermittel (27, 28) vorgesehen ist.

3. Vorrichtung nach Anspruch 2, **dadurch gekennzeichnet, daß** der Stellweg der Spindel (4) in der Brücke (1) beidseitig durch ein vorgespanntes Federpaket (15, 16) begrenzt ist.

4. Vorrichtung nach den Ansprüchen 2 und 3, **dadurch gekennzeichnet, daß** die beiden Hebelarme jeweils in Richtung des Stellweges Anschlagnoppen (17) aufweisen, die nach Überwindung der Vorspannung des jeweiligen Federpaketes (15, 16) mit zum Stellweg der Spindel (4) orthogonalen Anschlagflächen (18, 19) in der Brücke (1) zur Anlage bringbar sind.

5. Vorrichtung zur Durchführung des Verfahrens nach Anspruch 1 mit einer Brücke (1), an der die beiden Fernrohrtuben (2, 3) befestigt sind und einem an der Brücke (1) gelagerten Fokussier-Triebknopf (5) mit Fokussierantrieb, der mit den in den Fernrohrtuben (2, 3) verschiebbar gelagerten Fokussiergliedern (12) gekoppelt ist,
**dadurch gekennzeichnet, daß**
- der Fokussierantrieb eine längsverschiebliche Spindel (4) und ein koaxial auf dieser angeordnetes Achsrohr (22) enthält, wobei
- das Achsrohr (22) mit der Spindel (4) längsverschieblich derart gekuppelt ist, daß die Kupplung nach Überwindung einer Friktionskraft lösbar ist, daß
- an der Spindel (4) und dem Achsrohr (22) jeweils seitwärts abstehende Hebelarme (25, 26) befestigt sind, die mit einem der Fokussierglieder (12) gekoppelt sind und daß
- an der Brücke (1) ein von außen betätigbares, auf das Achsrohr (22) einwirkendes Arretiermittel (27, 28) vorgesehen ist.

6. Vorrichtung nach Anspruch 5, **dadurch gekennzeichnet, daß** die Spindel (4) mit dem Fokussier-Triebknopf (5) über eine obere Gewindemutter (23) verbunden ist, die mit dem Fokussier-Triebknopf (5) fest verbunden ist, daß das Achsrohr (22) mit einer unteren Gewindemutter (24) verbunden ist, die auf der Spindel (4) und in der Brücke (1) drehbar gelagert ist und der Fokussier-Triebknopf (5) auf der unteren Gewindemutter (24) mit einer vorbestimmten Friktionskraft drehbar gelagert ist.

7. Vorrichtung nach Anspruch 6, **dadurch gekennzeichnet, daß** in dem Kopf des Fokussier-Triebknopfes (5) eine gegenüber einer festen Indexmarke drehbar gelagerte Dioptrienscheibe (30) vorgesehen ist, die mit einem in die untere Gewindemutter (24) eingesetzten Übertragungstift (29) verbunden ist.

8. Vorrichtung nach einem der Ansprüche 2 oder 5, **dadurch gekennzeichnet, daß** als Arretiermittel ein federnd gelagerter Druckknopf (27) vorgesehen ist.

9. Vorrichtung nach einem der Ansprüche 2 oder 5, **dadurch gekennzeichnet, daß** an den Hebelarmen (25, 26) schwenkbar gelagerte und nach Justierung einer gleichen Fokussierstellung der Fokussierglieder (12) in den beiden Fernrohrtuben (2, 3) fixierbare Kopplungshebel (8) angeordnet sind.

## Claims

1. Method for focusing and diopter adjustment in a binocular telescope, in which, for the purpose of diopter adjustment, optical focusing elements (12) in the two telescope tubes (2, 3) can be displaced relative to one another, wherein
- as a result of rotation of a focus drive knob (5), both focusing elements (12) are displaced simultaneously by equal distances via a focus drive, **characterized in that**
- **in that** the displacement of at least one of the focusing elements (12) can be locked, and
- **in that**, as a result of rotation of the focus drive knob (5), while overcoming a frictional force in the focus drive to the locked focusing element (12), only the unlocked focusing element (12) is displaced.

2. Device for carrying out the method according to Claim 1, having a bridge (1), to which the two telescope tubes (2, 3) are fixed, and a focus drive knob (5) which is mounted on the bridge (1) and has a focus drive, which is coupled to the focusing elements (12) mounted in the telescope tubes (2, 3) such that they can be displaced,
**characterized in that**
- the focus drive contains a longitudinally displaceable spindle (4) and a two-armed lever (6) located transversely with respect to the spindle (4),
- the lever (6) being mounted (7) on the spindle (4) such that it can be pivoted by overcoming a frictional force and its lever arms being coupled to the focusing elements (12),
- a locking means (27, 28) that can be actuated from the outside and acts on the associated focusing element (12) being provided on at least one of the telescope tubes (2, 3).

3. Device according to Claim 2, **characterized in that** the actuating travel of the spindle (4) in the bridge (1) is limited on both sides by a prestressed spring pack (15, 16).

4. Device according to Claims 2 and 3, **characterized in that**, in each case in the direction of the actuating travel, the two lever arms have stop studs (17) which, after the prestress of the respective spring pack (15, 16) has been overcome, can be brought into contact with stop surfaces (18, 19) in the bridge (1) which are orthogonal with respect to the actuating travel of the spindle (4).

5. A device for carrying out the method according to Claim 1, having a bridge (1), to which the two telescope tubes (2, 3) are fixed, and a focus drive knob (5) which is mounted on the bridge (1) and has a focus drive, which is coupled to the focusing elements (12) mounted in the telescope tubes (2, 3) such that they can be displaced,
**characterized in that**
- the focus drive contains a longitudinally displaceable spindle (4) and an axial tube (22) arranged coaxially on the latter,
- the axial tube (22) being coupled to the spindle (4) such that it can be displaced longitudinally in such a way that the coupling can be released after a frictional force has been overcome,
- **in that** lever arms (25, 26) respectively projecting sideways are fixed to the spindle (4) and the axial tube (22) and are coupled to one of the focusing elements (12), and
- **in that** a locking means (27, 28) that can be actuated from outside and acts on the axial tube (22) is provided on the bridge (1).

6. Device according to Claim 5, **characterized in that** the spindle (4) is connected to the focus drive knob (5) by an upper threaded nut (23) which is firmly connected to the focus drive knob (5), **in that** the axial tube (22) is connected to a lower threaded nut (24) which is mounted on the spindle (4) and in the bridge (1) such that it can rotate, and the focus drive knob (5) is mounted on the lower threaded nut (24) such that it can be rotated with a predetermined frictional force.

7. Device according to Claim 6, **characterized in that** a diopter disk (30) that is mounted such that it can be rotated with respect to a fixed index mark is mounted in the head of the focus drive knob (5) and is connected to a transmission pin (29) inserted into the lower threaded nut (24).

8. Device according to either of Claims 2 and 5, **characterized in that** the locking means provided is a spring-mounted pushbutton (27).

9. Device according to either of Claims 2 and 5, **characterized in that** coupling levers (8) are arranged which are mounted on the lever arms (25, 26) such that they can be pivoted and, following adjustment of an identical focusing position of the focusing elements (12) in the two telescope tubes (2, 3), can be fixed.

## Revendications

1. Procédé de focalisation et de régulation dioptrique dans un télescope binoculaire, dans lequel, pour la régulation dioptrique, des organes de focalisation optiques (12) sont déplacés les uns par rapport aux autres dans les deux tubes télescopiques (2, 3),
- les deux organes de focalisation (12) étant déplacés simultanément des mêmes distances par rotation d'un bouton de réglage de focalisation (5) par le biais d'un entraînement de focalisation,
**caractérisé en ce que**
- le déplacement d'au moins l'un des organes de focalisation (12) peut être bloqué et
- par rotation du bouton de réglage de focalisation (5), seulement l'organe de focalisation non bloqué (12) est déplacé en surmontant une force de friction dans l'entraînement de focalisation vers l'organe de focalisation bloqué (12).

2. Dispositif pour mettre en oeuvre le procédé selon la revendication 1, comprenant un pont (1) sur lequel sont fixés les deux tubes télescopiques (2, 3) et un bouton de réglage de focalisation (5) monté sur le pont (1), avec un entraînement de focalisation, qui est accouplé aux organes de focalisation (12) montés de manière déplaçable dans les tubes télescopiques (2, 3),
**caractérisé en ce que**
- l'entraînement de focalisation contient une broche (4) déplaçable en longueur et un levier (6) à deux bras situé transversalement à la broche (4),
- le levier (6) étant monté (7) à pivotement sur la broche (4) en surmontant une force de friction et ses bras de levier étant accouplés aux organes de focalisation (12), et
- un moyen de blocage (27, 28) actionnable de l'extérieur, agissant sur l'organe de focalisation associé (12) étant prévu sur au moins l'un des tubes télescopiques (2, 3).

3. Dispositif selon la revendication 2, **caractérisé en ce que** la course de réglage de la broche (4) dans le pont (1) est limitée des deux côtés par un paquet de ressorts précontraint (15, 16).

4. Dispositif selon les revendications 2 et 3, **caractérisé en ce que** les deux bras de levier présentent à chaque fois dans la direction de la course de réglage des boutons de butée (17), qui peuvent être amenés en appui avec des faces de butée (18, 19) dans le pont (1), perpendiculaires à la course de réglage de la broche (4), après avoir surmonté la précontrainte du paquet de ressorts respectif (15, 16).

5. Dispositif pour mettre en oeuvre le procédé selon la revendication 1, comprenant un pont (1), sur lequel sont fixés les deux tubes télescopiques (2, 3), et un bouton de réglage de focalisation (5) monté sur le pont (1), avec un entraînement de focalisation, qui est accouplé aux organes de focalisation (12) montés de manière déplaçable dans les tubes télescopiques (2, 3),
**caractérisé en ce que**
- l'entraînement de focalisation contient une broche déplaçable en longueur (4) et un tube axial (22) disposé coaxialement sur celle-ci,
- le tube axial (22) étant accouplé de manière déplaçable en longueur avec la broche (4) de telle sorte que l'accouplement puisse être desserré en surmontant une force de friction,
- **en ce que** des bras de levier (25, 26) saillant latéralement sont fixés sur la broche (4) et le tube axial (22), et sont accouplés à l'un des organes de focalisation (12), et **en ce que**
- l'on prévoit sur le pont (1) un organe de blocage (27, 28) actionnable de l'extérieur, agissant sur le tube axial (22).

6. Dispositif selon la revendication 5, **caractérisé en ce que** la broche (4) est connectée au bouton de réglage de focalisation (5) par le biais d'un écrou fileté supérieur (23), qui est connecté fixement au bouton de réglage de focalisation (5), **en ce que** le tube axial (22) est connecté à un écrou fileté inférieur (24) qui est monté à rotation sur la broche (4) et dans le pont (1), et le bouton de réglage de focalisation (5) est monté à rotation sur l'écrou fileté inférieur (24) avec une force de friction prédéterminée.

7. Dispositif selon la revendication 6, **caractérisé en ce que** l'on prévoit dans la tête du bouton de réglage de focalisation (5) un disque dioptrique (30) monté à rotation en face d'une marque d'indexage fixe et qui est connecté à une tige de transfert (29) insérée dans l'écrou fileté inférieur (24).

8. Dispositif selon l'une quelconque des revendications 2 ou 5, **caractérisé en ce que** l'on prévoit comme moyen de blocage un bouton poussoir (27) monté élastiquement.

9. Dispositif selon l'une quelconque des revendications 2 ou 5, **caractérisé en ce que** des leviers d'accouplement (8) sont disposés de manière pivotante sur les bras de levier (25, 26) et de manière à pouvoir être fixés dans les deux tubes télescopiques (2, 3) après ajustement d'une position de focalisation identique des organes de focalisation (12).
